(19) Europäisches Patentamt
European Patent Office
Office européen des brevets

(11) Publication number: **0 438 881 A2**

## EUROPEAN PATENT APPLICATION

(21) Application number: 90313429.4

(22) Date of filing: 11.12.90

(51) Int. Cl.⁵: **G06F 9/44**

(30) Priority: **25.01.90 US 469972**

(43) Date of publication of application:
**31.07.91 Bulletin 91/31**

(84) Designated Contracting States:
**AT BE CH DE ES FR GB IT LI SE**

(71) Applicant: **WESTINGHOUSE ELECTRIC CORPORATION**
**Westinghouse Building Gateway Center**
**Pittsburgh Pennsylvania 15222(US)**

(72) Inventor: **Dunn, Larry Gene**
**311 29th Street**
**McKeesport, PA 15132(US)**
Inventor: **Patterson, Donald Wayne**
**312 George Street**
**Greensburg, PA 15601(US)**

(74) Representative: **van Berlyn, Ronald Gilbert et al**
**23, Centre Heights**
**London, NW3 6JG(GB)**

(54) **Method and apparatus for generating static computer displays.**

(57) A static display is designed with a graphic design package capable of producing a drawing exchange file. The drawing exchange file which corresponds to the designed static display is then converted into source code for a display generator. The generated source code can then be compiled and executed to produce a static computer display.

FIG. 1

DRAWING STATIC DISPLAY 10 → PRODUCING AN EXCHANGE FILE FOR THE STATIC DISPLAY 20 → TRANSLATING THE EXCHANGE FILE INTO SOURCE CODE FOR A DISPLAY GENERATOR 30 → COMPILING THE SOURCE CODE INTO OBJECT CODE 40 → PRODUCING THE STATIC DISPLAY ON THE DISPLAY SCREEN USING THE OBJECT CODE 50

EP 0 438 881 A2

## METHOD AND APPARATUS FOR GENERATING STATIC COMPUTER DISPLAYS

The present invention relates to a method for generating source code for a display generator to produce a static computer display. More particularly, the present invention relates to a method for generating source code corresponding to a computer display designed with a graphics design package.

Prior to the present invention, in order to create a computer display one would first sketch the display on paper or draw the display using a graphics design package in conjunction with a computer. Once the display design was finalized, it would be coded by a computer programmer or software engineer to produce source code for a predetermined computer display system. A typical computer display system consists of a display generator and a computer display. The display generator receives object code of a predetermined format and issues signals to the computer display (i.e., video display terminal) to generate the display defined by the source code. Numerous display generators exist and are well known in the art. For example, three well known display generators are IBM Professional Graphics Controller, Matrox Display Generator, and Raster Technology Display Generator.

Although this approach to creating computer displays is effective, it is very time consuming. For example, to produce the source code for a computer display, it is necessary to know the precise location of the structural elements drawn on the approved sketch so that they could be placed in the proper location on the display. As a result, the software engineer had to lay out the display prior to coding the display.

It is an object of the present invention to provide a method for translating a drawing created with a graphics design package into source code for a graphics display generator to produce the drawing on a computer display.

It is also an object of the present invention to provide a method for producing static computer displays with increased precision and design capabilities.

The above objects can be obtained by a method that takes a display sketch created by a display designer and generates source code which can be compiled to display the static background graphics and text on a computer display. Initially, the static computer display is easily drawn with a graphics design program which can produce a drawing exchange output file that corresponds to the static computer display drawn thereon. The method converts the information within the drawing exchange output file into source code for a display generator. Finally, the source code is compiled and executed to produce the static computer display, originally designed using the graphics design program, on the computer display. Thus, the hard coding step which was previously necessary is eliminated. Accordingly, the present invention enables static computer displays to be generated with increased efficiency, improved design capabilities, and increased precision.

These objects together with other objects and advantages which will be subsequently apparent, reside in the details of the construction and operation as more fully hereinafter described and claimed, reference being had to the accompanying drawings forming a part hereof.

Figure 1 is a flowchart depicting the major steps of the method according to the present invention;

Figs. 2A and 2B are flowcharts illustrating the method of the present invention;

Fig. 3 is a flowchart illustrating the method steps used to generate source code for text;

Fig. 4 is a flowchart illustrating the method steps used to generate source code for a solid object;

Fig. 5 is a flowchart illustrating the method steps used to generate source code for a circle;

Fig. 6 is a drawing of a display with a grid superimposed;

Fig. 7 is a chart illustrating the contents of a drawing exchange file;

Fig. 8 is a chart illustrating the contents of a source code file generated by the present invention; and

Fig. 9 is a block diagram of an apparatus of the present invention.

The present invention will be described with reference to the drawings. The method of the present invention begins by a display designer designing the display. Today, display designs are highly sophisticated, some even requiring specific positioning and coloring. For instance, the displays may use specific colors to group functionally related information. In the nuclear power industry, for example, government regulations require that certain levers and controls be associated with certain generators. This is achieved with color groupings as well as functional groupings.

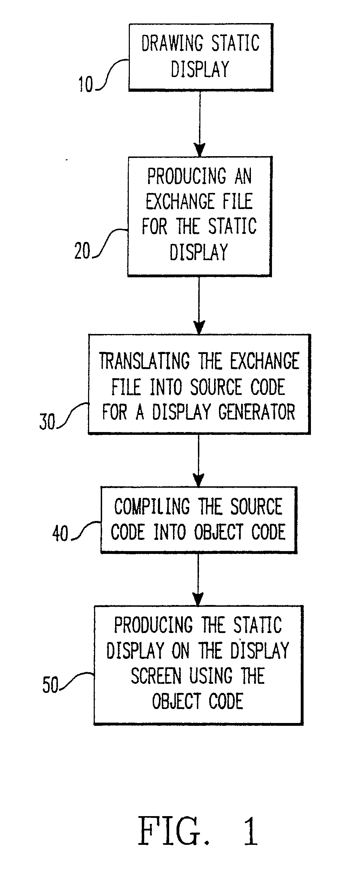

With reference to Fig. 1, drawing 10 the static display, can be accomplished by using a graphics design package in conjunction with a computer. A graphics design package is a computer program which enables a user to create drawings using lines, text or predetermined shapes such as circles, solids, rectangles, arcs and the like.

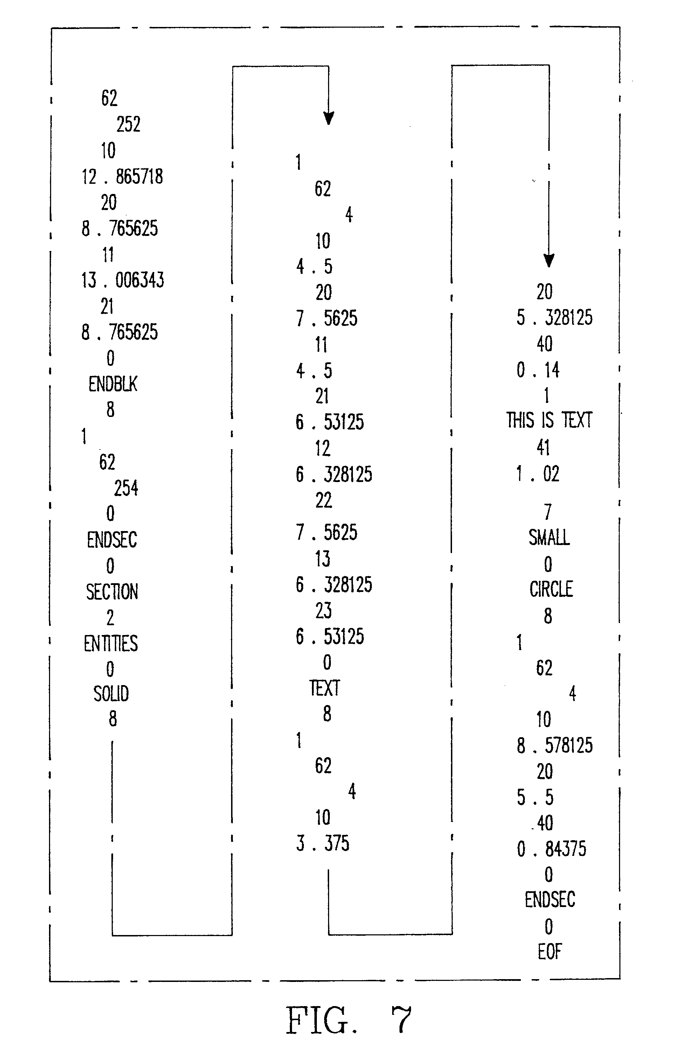

One readily available graphics design package is AutoCAD. The published operating manual of the AutoCAD program produced by AutoDesk, Inc. more fully explains its operation. AutoCAD is a preferable graphics display package because it provides a drawing exchange file allowing the user to recreate the drawing on another computer system using AutoCAD. The drawing exchange file includes information needed in order to reconstruct the display in AutoCAD. For example, it contains layer, position, object type, and color information. An example of a drawing exchange file output from AutoCAD is illustrated in Fig. 7 of the drawings.

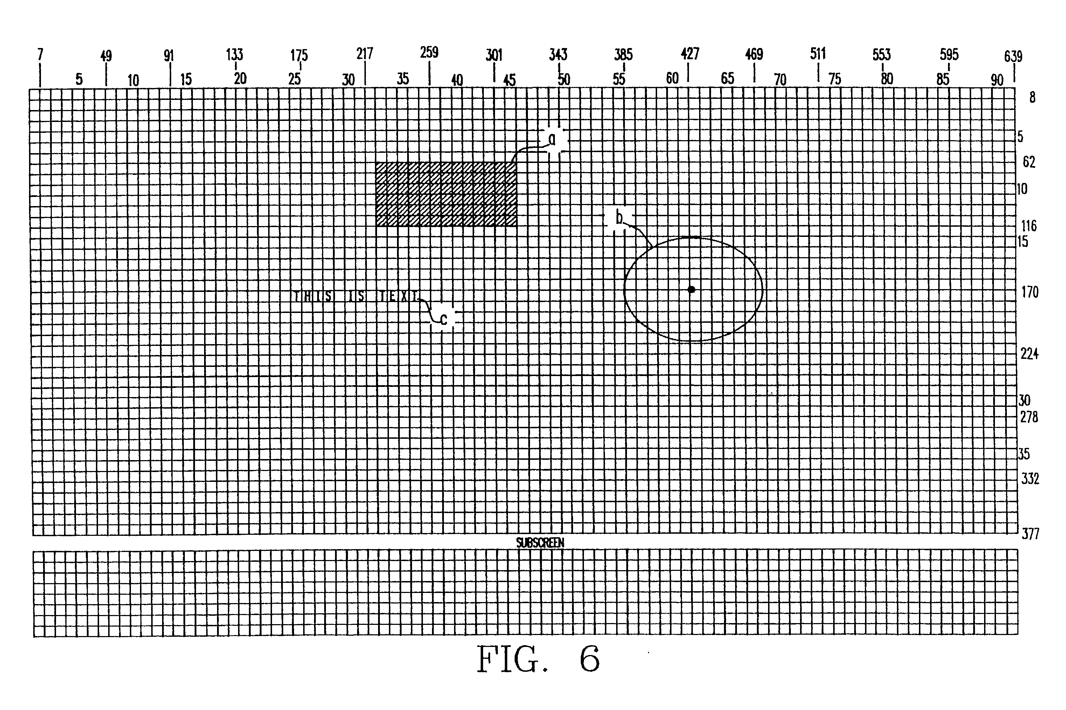

To simplify display design, one can create a grid pattern in AutoCAD which corresponds to the size and resolution capabilities of the display generator to be utilized. An illustration of a grid pattern is provided in Fig. 6. This allows the display designer to precisely design the drawing by positioning each of the objects of the drawing in the exact position which they will eventually appear on the display screen.

As illustrated in Fig. 1, once the designer has designed the display by a creating 10 a drawing using a graphics design package, the designer uses the graphics design package to produce 20 a drawing exchange file for the drawing. Since the drawing exchange file is not able to drive a display generator, the file must be translated into source code for the display generator.

After the translating process has produced properly organized source code, the source code must be compiled so that it can be executed by the display generator. In step 40 of Fig. 1, the source code is compiled into object code. The object code is then able to be executed by the display generator. In step 50, the object code is executed to produce the static display on the computer screen. Thus, the process begins with an initial drawing 10 and ends with a final display 50 of the initial drawing.

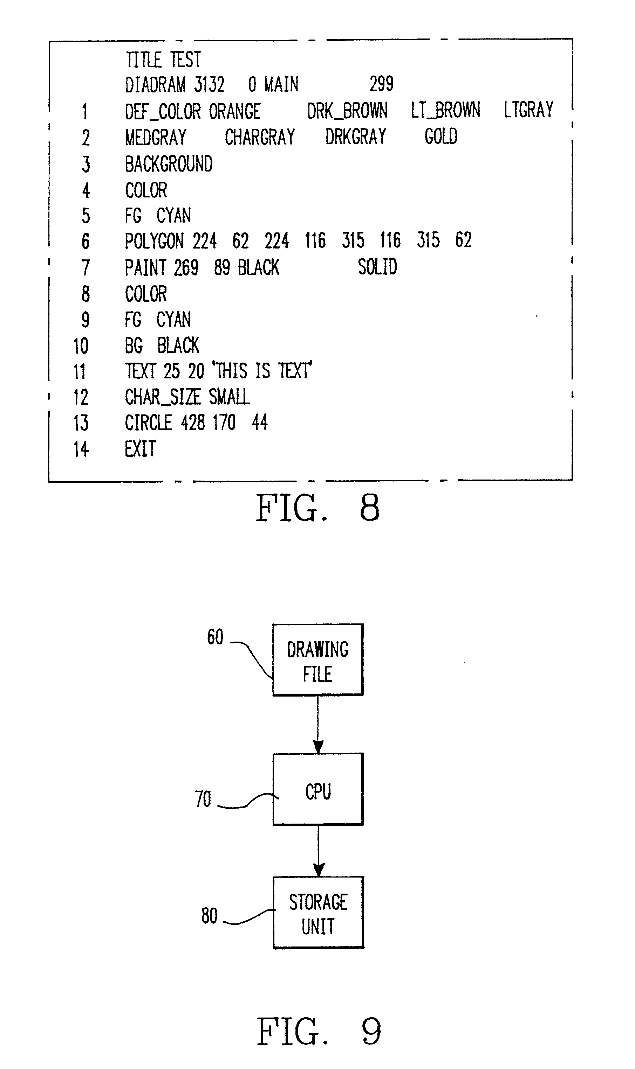

Fig. 9 is a block diagram illustrating an apparatus capable of performing the method of the present invention. The apparatus includes a drawing file 60, a CPU 70 and a storage unit 80. The CPU 70 processes information contained within the drawing file 60 to translate it into compilable source code. The generated source code is then stored in the storage unit 80.

The following discussion will be primarily focused on one embodiment of the present invention which is designed for use with a Matrox display generator. One implementation of a Matrox display generator is a distributed processing family (DPF) system, hereinafter referred to as a DPF display generator. Note, however, other display generators though not specifically discussed are within the scope of this invention.

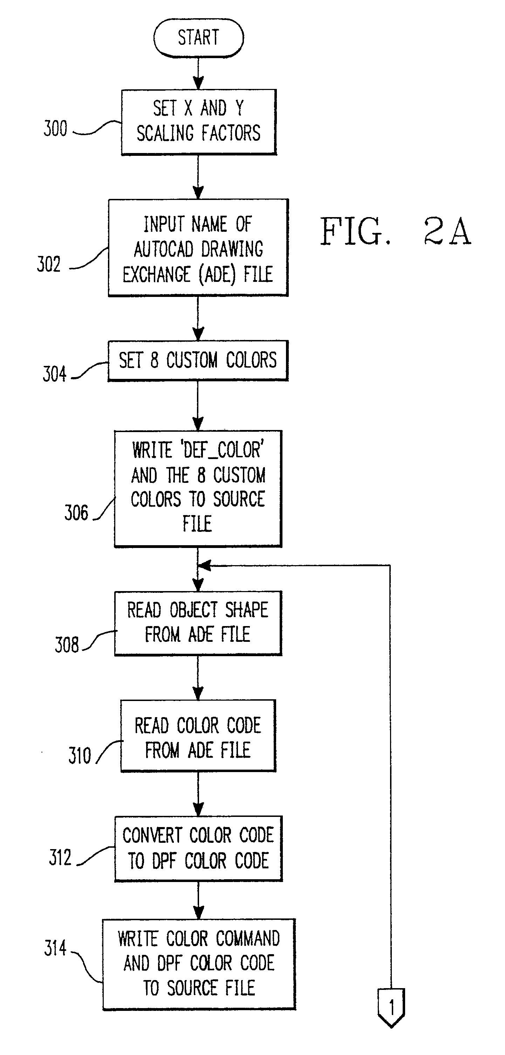

The operation of the present invention will now be discussed with reference to Figs. 2A, 2B, 3-5, 7 and 8. Fig. 7 illustrates a drawing exchange file for the display design shown in Fig. 6. Fig. 8 illustrates a DPF source code file corresponding to the drawing exchange file of Fig. 7.

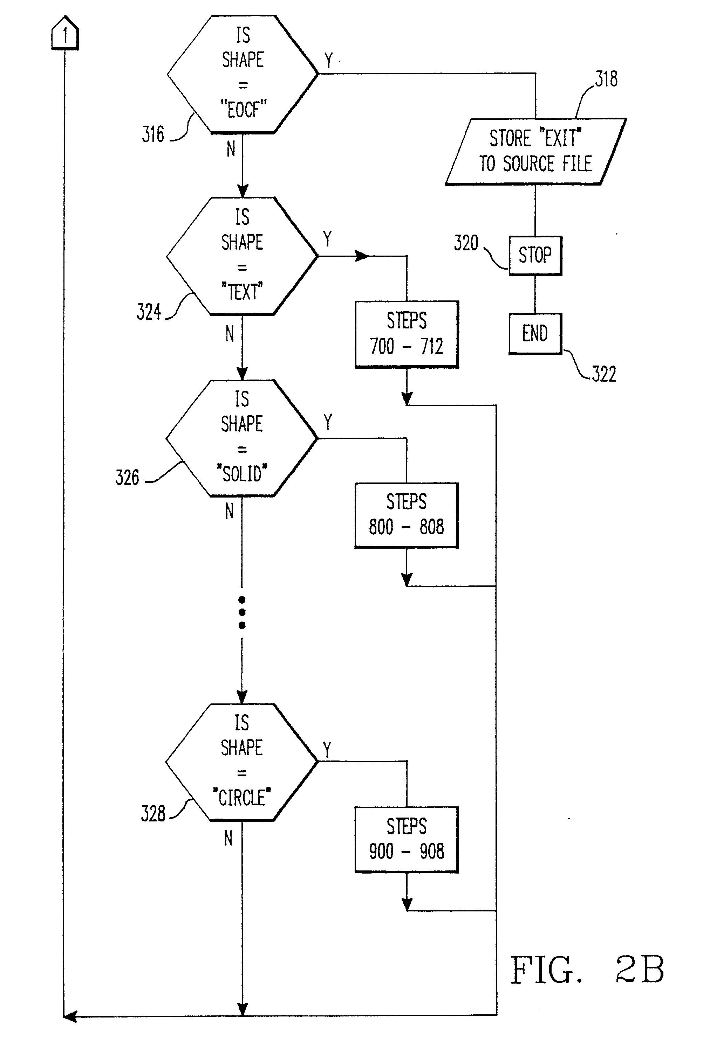

Figs. 2A and 2B are flowcharts illustrating the basic translating 30 of the present invention illustrated in Fig. 1. Conversion of the drawing exchange file into source code for the DPF display generator numerical conversion requires scaling. In step 300, scaling factors are set to convert the coordinate units of the graphics design package to the coordinate units of the display generator. The drawing exchange file from AutoCAD provides dimensions of the object shapes of the drawings in units of inches. The DPF display generator, on the other hand, requires that dimensions be in pixels. Thus, the translator is used to convert from inches to pixels. In addition, the translator performs scaling when the initially designed display is to be finally displayed on a display screen of different size. For example, a 13-inch (33.02 cm) screen having actual dimensions 12.7969 (32.5041) by 8.7656 (22.2646) is scaled in the x direction by 639 pixels/12.7969 inches (32.5041 cm) and in the y direction by 458 pixels/8.7656 inches (22.2646 cm). This scaling corresponds to pixel coordinates. The DPF display generator also supports character coordinates for displaying text and these coordinates are also illustrated in Fig. 6.

Referring to Fig. 2A illustrating the major translating steps, in step 302 the user inputs the name of the drawing exchange file which is to be translated. In step 304, based on the assumption of a DPF display generator, eight custom colors can be set. These are in addition to the standard colors of red, blue, green, black, white, yellow, cyan and magenta. In Fig. 8, line 3 defines the custom colors for the display generator. As shown, the custom colors may include orange, dark brown, light brown, light gray, medium gray, charcoal gray, dark gray and gold. AutoCAD has the ability to display 256 colors which is far in excess of the 16 allowable with the DPF display generator. Thus, one can either provide conversion of unrecognized DPF display generator colors used in AutoCAD to recognizable DPF colors or one can simply originally draw the display to AutoCAD using only the selected 16 colors. To facilitated this limitation, the grid pattern provided in addition to providing pixel positioning can also provide color restrictions.

In step 306, the eight customized colors are stored to the source file. Lines 1 and 2 of Fig. 8 illustrate an example of the source code for the custom color selection.

In step 308, an object shape from the drawing exchange file is read for conversion. As an example, Fig. 6 illustrates three object shapes, namely, a "SOLID" (a), a "CIRCLE" (b) and "TEXT" (c). For each object shape the color information in the drawing exchange file is first read during step 310.

The color information is then converted in step 312 to one of the sixteen DPF display generator colors. For example, as illustrated in Fig. 7, the first object shape (a "SOLID") is followed by the layer designation of "8" which identifies the following "1" as the layer, and the color designation of "62" which identifies the following "4" as the color. The color code "4" from AutoCAD is converted to the appropriate color of the DPF display generator which happens to be cyan.

In step 314, a color command and the DPF display generator color code are then written to the source file. For example, lines 4 and 5 of Fig. 8 show the resulting source code which commands certain colors for the display generator. Specifically, line 4 is the color command and line 5 commands a cyan foreground color. Similarly, line 8 in Fig. 8 is also a color command, line 9 is a foreground color command followed by a foreground color, and line 10 is a background color command followed by a background color. Thus, as illustrated by lines 8-11 of Fig. 8, the object shape of "TEXT" is preceded by a color command along with a foreground color and a background color. Contrast the other shape elements of Fig. 8 which are preceded by the color command and only a foreground color. In addition, some shape elements totally omit the color command and any color designations if the colors have not changed since the last color command. The syntax of the source code, of course, depends upon the particular display generator for which the source code is being created for.

Referring now to Fig. 2B, in step 316 the object shape read in during step 308 is compared with an end of file designation to determine if the translator has reached the end of the drawing exchange file. If so, steps 318, 320 and 322 are executed to terminate the translation process. If not, the translator proceeds to compare the object shape read in during step 308 with each of the object entities of AutoCAD. The entities available in AutoCAD which are available in DPF include "LINE", "TEXT", "RECTANG", "CIRCLE", "SOLID" AND "ARC".

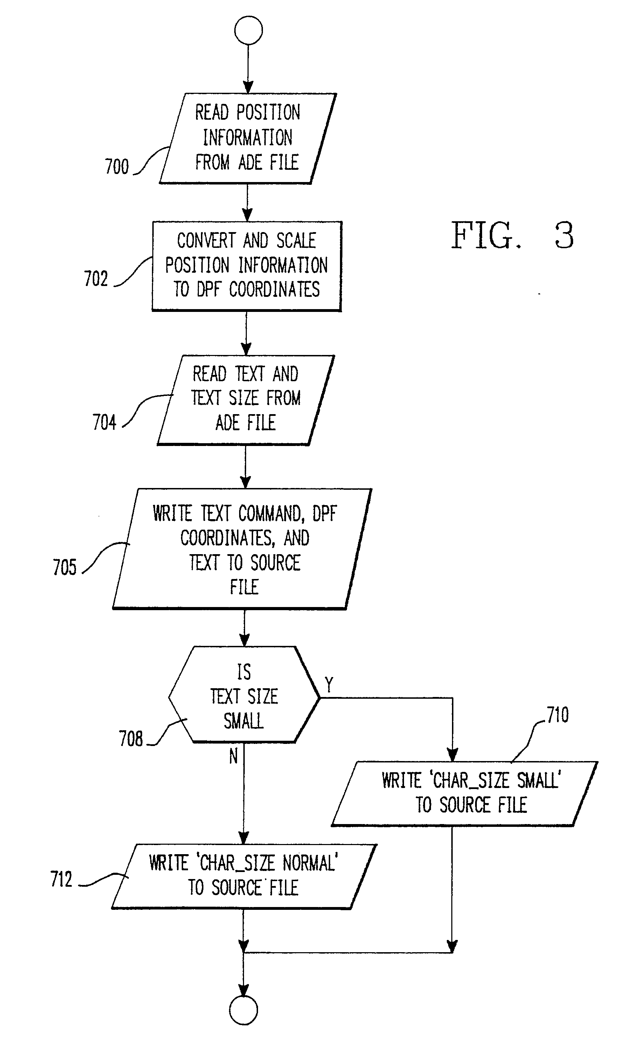

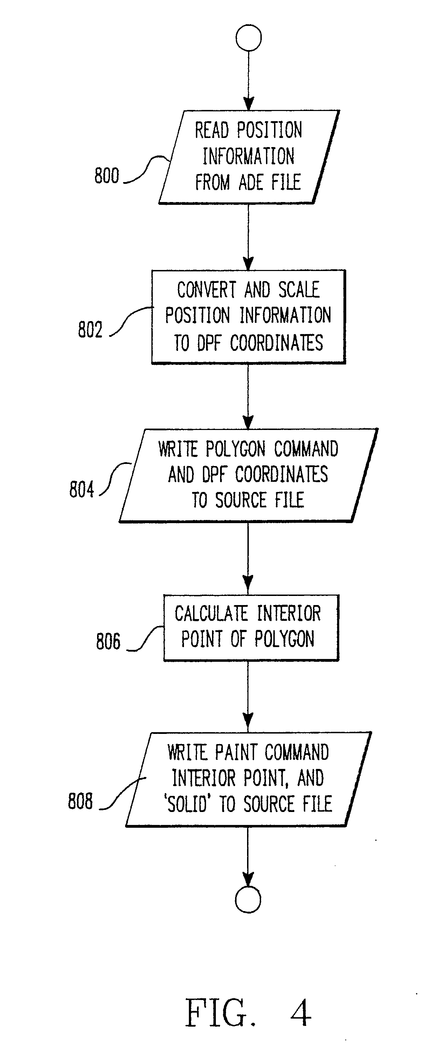

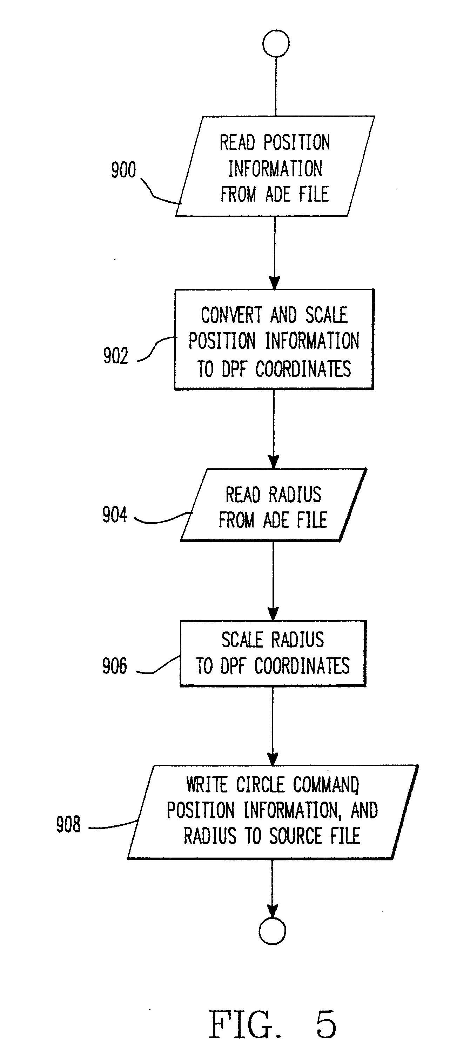

In step 324, the object shape is compared with "TEXT". If the object shape is "TEXT", then the translator executes steps 700-712 which are illustrated in Fig. 3. Otherwise, if the object shape is a "SOLID", steps 800-808 are executed by the translator as illustrated in Fig. 4. Similarly, steps 900-908 of Fig. 5 are executed if the object shape is a "CIRCLE". The remaining object entities not illustrated in Fig. 2B are translated in a similar fashion. A detailed discussion of the execution steps illustrated in Figs. 3, 4 and 5 is presented below.

As mentioned above, if the object shape is "TEXT", the translator proceeds to execute steps 700-712 which are included in the flowchart illustrated in Fig. 3. In step 700, the position information is read from the drawing exchange file. For example, following the "TEXT" entity in the drawing exchange file shown in Fig. 7 is the numeral "10" which designates the number 3.375 following it as the x-position starting point. Next, the numeral 20 is read which designates the following number 5.328125 as the y-position starting point. Once the position information has been read, it is converted and appropriately scaled in step 702 into DPF display generator coordinates.

Next, in step 704, the text size, the actual text and the text width are read from the drawing exchange file. In the example in Fig. 7, the drawing exchange file defines a text size of .14 inches (0.3556 cm), a text width of 1.02 inches (2.5908 cm) and actual text of "THIS IS TEXT", which are designated by "40", "41" and "1", respectively. In step 706, a text command followed by the starting point character coordinates and the actual text are written to the source file. Line 11 of Fig. 8 provides an example of the resulting source code from the write operation in step 706. Next, the step 708, the translator determines whether the text size is either small or normal. For example, with a DPF display generator a comparison value of 0.2 is preferred. If the text size is small (i.e., < = 0.2 inches or 0.508 cm), the operation proceeds to step 710 where a small character size command is written to the source file, otherwise step 712 writes a normal character size to the source file. An example of a small size character command is illustrated on line 12 in Fig. 8.

If the object shape is a "SOLID", the translator proceeds to execute steps 800-808. In step 800, position information is read from the drawing exchange file. Fig. 7 provides an example of position information following the object entity "SOLID". In Fig. 7 the "10" on the line after "SOLID" designates "4.5" as the x-position and "20" on the next line designates "7.5625" as the y-position for the first of four points defining a polygon. The remaining three points are similarly designated by "11" and "21", "12" and "22", and "13" and "23". Once the four points are read in, they are converted and appropriately scaled into DPF coordinates. In step 804, the resulting source code is written to the source file. For example, line 6 of Fig. 8 shows a polygon command followed by x and y locations for the four points of the polygon in units of pixels and in the order required by DPF.

Next, in step 806, an interior point of the polygon is calculated for use with a paint command. In step 808, the paint command for DPF, the interior point, the background color, and "SOLID" are written to the source file. An example of this portion of the source file is shown on line 7 in Fig. 8.

If the object shape is a "CIRCLE", the translator proceeds to execute steps 900-908. In step 900, position information is read from the drawing exchange file. For example, Fig. 7 shows "10" and "20"

4

designating x and y locations for the center of the circle. In step 904, the radius of the circle is read from the drawing exchange file. Fig. 7 shows "40" designating a radius of "0.84375". These values are then converted and scaled to DPF coordinates in step 906. Once converted, the DPF coordinates are written to the source file in step 908 as a circle command followed by the center position and the radius.

As mentioned above, for other object entities, similar translation steps are performed. The above discussion and accompanying drawings are representative of the translation steps required for the other object entities not specifically discussed.

When designing the display using a graphics design package, one should only use the graphic items that the display generator, e.g., DPF, supports. For DPF, these items are solids, rectangles, lines, text, arcs and circles. However, if the display generator being used is able to support more advanced graphic items which are also available in the graphic design package, those items may be used and translated in a like manner.

The final task is to produce the design on a display screen. The display screen is controlled by a display generator which is controlled through compiled source code. Different display generators, such as DPF, Raster Technologies Display Generator and IBM Professional Graphics Controller, use different source code and have different organizational requirements.

A second embodiment of the present invention provides for dynamic area identification. That is, an optional feature of the present invention is to provide a reference file which is useful when later coding the dynamic portions of the static computer display. For example, in a display for a nuclear power plant the dynamic portions of the display might include such items as alarm limits, flows, temperatures, and other like monitored values which change over time. This feature uses a predetermined flag to indicate the regions of the designed display designated as dynamic regions as opposed to static regions. One example of a predetermined flag is to use a color code to designate dynamic regions. This color code designates a color which never appears on the display, but merely indicates a dynamic region. By testing for this color code prior to storing the source code for a particular element, the source code may be written to a reference file which the dynamic programmer can later refer to. This enables the dynamic programmer to identify the shape, size and precise positioning of regions for which he must provide the dynamic coding. Thus, the process of dynamic coding is simplified.

The many features and advantages of the invention are apparent from the detailed specification and thus is intended by the appended claims to cover all such features and advantages of the invention which fall within the spirit and scope thereof. Further, since numerous modifications and changes will readily occur to those skilled in the art, it is not desired to limit the invention to the exact construction and operation illustrated and described, and accordingly all suitable modifications and equivalents may be resorted to, as falling within the scope of the invention.

IDENTIFICATION OF REFERENCE NUMERALS USED IN THE DRAWINGS

| LEGEND | REF. NO. | FIGURE |
|---|---|---|
| DRAWING STATIC DISPLAY | 10 | 1 |
| PRODUCING AN EXCHANGE FILE FOR THE STATIC DISPLAY | 20 | 1 |
| TRANSLATING THE EXCHANGE FILE INTO SOURCE CODE FOR A DISPLAY GENERATOR | 30 | 1 |
| COMPILING THE SOURCE CODE INTO OBJECT CODE | 40 | 1 |
| PRODUCING THE STATIC DISPLAY ON THE DISPLAY SCREEN USING THE OBJECT CODE | 50 | 1 |
| DRAWING FILE | 60 | 9 |
| CPU | 70 | 9 |
| STORAGE UNIT | 80 | 9 |
| SET X AND Y SCALING FACTORS | 300 | 2A |
| INPUT NAME OF AUTOCAD DRAWING EXCHANGE (ADE) FILE | 302 | 2A |
| SET 8 CUSTOM COLORS | 304 | 2A |
| WRITE "DEF-COLOR" AND THE 8 CUSTOM COLORS TO SOURCE FILE | 306 | 2A |
| READ OBJECT SHAPE FROM ADE FILE | 308 | 2A |
| READ COLOR CODE FROM ADE FILE | 310 | 2A |
| CONVERT COLOR CODE TO DPF COLOR CODE | 312 | 2A |
| WRITE COLOR COMMAND AND DPF COLOR CODE TO SOURCE FILE | 314 | 2A |
| IS SHAPE = "EOCF" | 316 | 2B |
| STORE "EXIT" TO SOURCE FILE | 318 | 2B |
| STOP | 320 | 2B |
| END | 322 | 2B |
| IS SHAPE = "TEXT" | 324 | 2B |
| IS SHAPE = "SOLID" | 326 | 2B |
| IS SHAPE = "CIRCLE" | 328 | 2B |

6

## IDENTIFICATION OF REFERENCE NUMERALS USED IN THE DRAWINGS

| LEGEND | REF. NO. | FIGURE |
|---|---|---|
| READ POSITION INFORMATION FROM ADE FILE | 700 | 3 |
| CONVERT AND SCALE POSITION INFORMATION TO DPF COORDINATES | 702 | 3 |
| READ TEXT AND TEXT SIZE FROM ADE FILE | 704 | 3 |
| WRITE TEXT COMMAND, DPF COORDINATES, AND TEXT TO SOURCE FILE | 705 | 3 |
| IS TEXT SIZE SMALL | 708 | 3 |
| WRITE "CHAR-SIZE SMALL" TO SOURCE FILE | 710 | 3 |
| WRITE "CHAR-SIZE NORMAL" TO SOURCE FILE | 712 | 3 |
| READ POSITION INFORMATION FROM ADE FILE | 800 | 4 |
| CONVERT AND SCALE POSITION INFORMATION TO DPF COORDINATES | 802 | 4 |
| WRITE POLYGON COMMAND AND DPF COORDINATES TO SOURCE FILE | 804 | 4 |
| CALCULATE INTERIOR POINT OF POLYGON | 806 | 4 |
| WRITE PAINT COMMAND INTERIOR POINT, AND "SOLID" TO SOURCE FILE | 808 | 4 |
| READ POSITION INFORMATION FROM ADE FILE | 900 | 5 |
| CONVERT AND SCALE POSITION INFORMATION TO DPF COORDINATES | 902 | 5 |
| READ RADIUS FROM ADE FILE | 904 | 5 |
| SCALE RADIUS TO DPF COORDINATES | 906 | 5 |
| WRITE CIRCLE COMMAND POSITION INFORMATION, AND RADIUS TO SOURCE FILE | 908 | 5 |

**Claims**

1. A method for providing source code to produce a computer generated display, said method characterized by the steps of:
    (a) receiving (20) uncompilable drawing information for a display from a graphics display program; and
    (b) converting (30) the uncompilable drawing information into compilable code for a display generator.

2. A method as recited in claim 1, further characterized by the step of (c) producing (50) the computer

7

generated display with the display generator based on the compilable code.

3. A method as recited in claim 2, wherein the computer generated display is a static computer display, and

wherein said producing in step (c) produces source code for the static computer display.

4. A method as recited in claim 2, further characterized by the steps of:
   (d) identifying, during said converting (30) in step (b), a dynamic portion of the computer generated display; and
   (e) storing a location of the dynamic portion in a reference file.

5. A method as recited in claim 2, wherein the graphics display program includes a drawing exchange file (60) containing uncompilable drawing information, and
   wherein said converting of step (b) includes the steps of:
   (i) scaling (300) the uncompilable drawing information of the drawing exchange file to match a display size of the display generator for the computer generated display;
   (ii) identifying (308) objects of the computer generated display from the uncompilable drawing information;
   (iii) converting (324, 326, 328) the objects into commands for the display generator; and
   (iv) forming the source code (706, 710, 712, 804, 808, 908) by combining the commands.

6. A method as recited in claim 5, wherein said converting of step (b) (iii) includes the steps of:
   (1) comparing (324, 326, 328) the objects with object types to identify an object type for each of the objects; and
   (2) converting (702, 706, 710, 712, 802, 804, 808, 902, 908) the objects into the commands based upon the object type.

7. A method as recited in claim 6, wherein said converting of step (b) further includes the steps of:
   (v) selecting (304) custom colors for the display generator;
   (vi) identifying (310) color information from the drawing data for each of the objects identified in step (b)(ii);
   (vii) converting (312) the color information into color codes for the display generator; and
   (viii) forming (314) the source code by combining the color codes with a color command.

8. A method for producing source code to produce a computer generated display with a display generator having a display size, said method characterized by the steps of:
   (a) receiving uncompilable drawing information for a static computer display from a drawing exchange file of a graphics display program;
   (b) scaling (300) the uncompilable drawing information of the drawing exchange file to match the display size of the display generator;
   (c) identifying (308) objects of the static computer display from the drawing information;
   (d) selecting (304) custom colors for the display generator;
   (e) identifying (310, 700, 800, 900, 904) color information and position information from the drawing information for each of the objects identified in step (c);
   (f) converting (312) the color information into color codes and color commands for the display generator;
   (g) converting (702, 802, 902) the position information into position coordinates for the display generator;
   (h) comparing (324, 326, 328) the objects with object types to identify an object type for each of the objects;
   (i) converting (706, 804, 908) the objects into shape commands for the display generator based upon the object type; and
   (j) producing (314, 706, 804, 808, 908) the source code from the position coordinates, the shape commands, the color codes and color commands.

9. A method as recited in claim 8, further characterized by the steps of:
   (k) identifying a dynamic portion of the computer generated display; and
   (l) storing a location of the dynamic portion in a reference file.

10. A method as recited in claim 8, wherein the computer generated display is a static computer display, and
wherein in step (j) source code is produced for the static computer display.

11. A method as recited in claim 10, wherein each object type is one of a line, text, circle, solid, rectangle and arc.

12. A method as recited in claim 11, wherein the position information differs for each of the object types.

13. A method as recited in claim 12, wherein said converting (706, 804, 908) in step (i) includes the step of converting the position information in inches to the position coordinates in pixels.

14. A computer system for producing compilable code to produce a computer generated display, the system includes storage means (80) for storing the compilable code, said computer system characterized by:
input means for receiving uncompilable drawing information for a display; and
conversion means (70) for converting the uncompilable drawing information into compilable code for a display generator.

15. A system as recited in claim 14, further characterized by display means for producing the computer generated display based on the compilable code.

16. A system as recited in claim 15, wherein the computer generated display is a static computer display.

17. A system as recited in claim 14, further including:
compilation means (70) for compiling the compilable code into object code; and
display means for producing the computer generated display by executing the object code in the display generator.

18. A system as recited in claim 17, wherein the uncompilable drawing information is contained within a drawing exchange file (60) of a graphics display program, and
wherein said conversion means (70) is characterized by:
means for scaling the uncompilable drawing information of the drawing exchange file (60) to match a display size of the display generator;
means for identifying objects of the display from the drawing information;
command supplying means for converting the objects into commands for the display generator; and
means for combining the commands to form the source code.

19. A system as recited in claim 18, wherein the computer generated display is a static computer display.

FIG. 1

EP 0 438 881 A2

START

300 — SET X AND Y SCALING FACTORS

302 — INPUT NAME OF AUTOCAD DRAWING EXCHANGE (ADE) FILE

FIG. 2A

304 — SET 8 CUSTOM COLORS

306 — WRITE 'DEF_COLOR' AND THE 8 CUSTOM COLORS TO SOURCE FILE

308 — READ OBJECT SHAPE FROM ADE FILE

310 — READ COLOR CODE FROM ADE FILE

312 — CONVERT COLOR CODE TO DPF COLOR CODE

314 — WRITE COLOR COMMAND AND DPF COLOR CODE TO SOURCE FILE

1

11

FIG. 2B

FIG. 3

READ POSITION
INFORMATION
FROM ADE FILE
700

CONVERT AND SCALE
POSITION INFORMATION
TO DPF COORDINATES
702

READ TEXT AND
TEXT SIZE FROM
ADE FILE
704

WRITE TEXT COMMAND, DPF
COORDINATES, AND
TEXT TO SOURCE
FILE
705

IS
TEXT SIZE
SMALL
708

Y

N

WRITE 'CHAR_SIZE SMALL'
TO SOURCE FILE
710

WRITE 'CHAR_SIZE NORMAL'
TO SOURCE FILE
712

```
        ( )
         │
         ▼
┌─────────────────────┐
│   READ POSITION     │
800 │   INFORMATION    │
│   FROM ADE FILE     │
└─────────────────────┘
         │
         ▼
┌─────────────────────┐
│  CONVERT AND SCALE  │
802 │ POSITION INFORMATION │
│   TO DPF COORDINATES │
└─────────────────────┘
         │
         ▼
┌─────────────────────┐
│ WRITE POLYGON COMMAND │
804 │ AND DPF COORDINATES │
│    TO SOURCE FILE    │
└─────────────────────┘
         │
         ▼
┌─────────────────────┐
│ CALCULATE INTERIOR  │
806 │  POINT OF POLYGON  │
└─────────────────────┘
         │
         ▼
┌─────────────────────┐
│ WRITE PAINT COMMAND │
│  INTERIOR POINT, AND │
808 │ 'SOLID' TO SOURCE FILE │
└─────────────────────┘
         │
         ▼
        ( )
```

FIG. 4

```
        ○
        │
        ▼
  ┌──────────────┐
  │ READ POSITION│
  │ INFORMATION  │  900
  │ FROM ADE FILE│
  └──────────────┘
        │
        ▼
  ┌──────────────────┐
  │ CONVERT AND SCALE│
  │POSITION INFORMATION│  902
  │ TO DPF COORDINATES│
  └──────────────────┘
        │
        ▼
  ┌──────────────┐
  │ READ RADIUS  │  904
  │ FROM ADE FILE│
  └──────────────┘
        │
        ▼
  ┌──────────────┐
  │ SCALE RADIUS │  906
  │TO DPF COORDINATES│
  └──────────────┘
        │
        ▼
  ┌────────────────────┐
  │ WRITE CIRCLE COMMAND│
  │POSITION INFORMATION, AND│  908
  │ RADIUS TO SOURCE FILE│
  └────────────────────┘
        │
        ▼
        ○
```

FIG. 5

FIG. 6

```
     62                    1                      20
        252                   62                5 . 328125
     10                            4               40
     12 . 865718           10                   0 . 14
        20                 4 . 5                    1
     8 . 765625              20                 THIS IS TEXT
        11                 7 . 5625                41
     13 . 006343             11                 1 . 02
        21                 4 . 5                    7
     8 . 765625              21                 SMALL
        0                  6 . 53125               0
     ENDBLK                   12                CIRCLE
        8                  6 . 328125              8
     1                       22                 1
        62                 7 . 5625                62
           254               13                      4
        0                  6 . 328125           10
     ENDSEC                  23                 8 . 578125
        0                  6 . 53125               20
     SECTION                 0                  5 . 5
        2                  TEXT                    40
     ENTITIES                8                  0 . 84375
        0                  1                       0
     SOLID                   62                 ENDSEC
        8                         4                0
                           10                   EOF
                           3 . 375
```

FIG.   7

```
          TITLE TEST
          DIADRAM 3132   0 MAIN            299
     1    DEF_COLOR ORANGE      DRK_BROWN    LT_BROWN    LTGRAY
     2    MEDGRAY     CHARGRAY    DRKGRAY      GOLD
     3    BACKGROUND
     4    COLOR
     5    FG  CYAN
     6    POLYGON 224  62  224  116  315  116  315  62
     7    PAINT 269  89 BLACK           SOLID
     8    COLOR
     9    FG  CYAN
    10    BG  BLACK
    11    TEXT 25 20 'THIS IS TEXT'
    12    CHAR_SIZE SMALL
    13    CIRCLE 428 170  44
    14    EXIT
```

## FIG. 8

60 — DRAWING FILE

70 — CPU

80 — STORAGE UNIT

## FIG. 9